# EUROPEAN PATENT APPLICATION

(11) **EP 4 310 471 A1**
(43) Date of publication of application: **24.01.2024**
(21) Application number: 22382703.1
(22) Date of filing: 22.07.2022
(51) Int. Cl.: G01J 1/04, G01J 4/00, G01J 4/04

(54) **CALIBRATION TARGET AND METHOD FOR THE SNAPSHOT CALIBRATION OF IMAGING POLARIMETERS**

(71) Applicant: Instituto Nacional de Técnica Aeroespacial, 28850 Torrejón de Ardoz (ES)
(72) Inventor: ÁLVAREZ HERRERO, Alberto, 28002 Madrid (ES); GARCÍA PAREJO, Pilar, 28814 Daganzo de Arriba (ES)
(74) Representative: TRBL Intellectual Property

(57) **Abstract**

The invention provides a device (1) and a method for the calibration of a polarimeter. The device (1) comprises a pixel array, the array comprising at least two rows of pixels (2) and two columns of pixels (2). Each pixel (2) comprises at least four subpixels (3), each subpixel (3) comprising at least a micropolarizer element, so that each pixel comprises at least four different micropolarizers.

## Description

### TECHNICAL FIELD

This invention belongs to the field of method and devices for calibrating imaging polarimeters.

### STATE OF THE ART

Calibrating an imaging polarimeter is a complex operation. An input beam with different well-known polarization states must feed the instrument to be calibrated. Usually, a polarizing optical element, such as a linear polarizer or an optical retarder, is inserted in the incoming beam that is rotated to generate the polarization states. Then, different images are sequentially taken at different rotation angles of the polarizing element that corresponds to different polarization states. From the acquired images and the knowledge of the corresponding polarization state of the incoming light, the calibration can be obtained after several mathematical calculations.

However, the calibration setup must guarantee that the polarization state is homogeneous across beam to achieve a proper calibration in the whole surface of the image. In known methods, this homogeneity is difficult to be achieved, mostly considering that these methods require multiple image acquisitions and, therefore, they are slow to be performed.

On top of this, calibration must be repeated very often, preferably before each measurement, to ensure the quality and reliability of its operation. Hence, an improvement in this process would be of a high value, considering the numerous times that this calibration needs to be carried out.

A device and method to improve the speed and accuracy of an imaging polarimeter calibration is therefore sought.

### DESCRIPTION OF THE INVENTION

The invention provides an alternative solution for this problem by means of a device according to claim 1. Preferred embodiments of the invention are defined in dependent claims.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

In a first inventive aspect, the invention provides a calibration target for the calibration of an imaging polarimeter, the imaging polarimeter comprising a plurality of sensor elements, wherein
the calibration target comprises a pixel array, the array comprising at least two rows of pixels and two columns of pixels; and
each pixel comprises at least nine subpixels, each subpixel comprising at least a micropolarizer element, so that each pixel comprises at least nine micropolarizers, at least four of them being different.

An imaging polarimeter is a polarimeter which has an image sensor that comprises sensor elements, in such a way that it produces an output wherein each sensor element produces information concerning the detected polarization.

Known calibration methods usually employ a combination of polarizers and retarders which are arranged before the polarimeter. Then, several images are taken while this arrangement is being rotated.

With such a device, there is no need to take different measurements at different angular positions: a single card is enough to perform the whole calibration of an imaging polarimeter with a snapshot.

Further, this device can be designed ad hoc for each polarimeter, since number of rows and columns may be chosen depending on the resolution of the imaging polarimeter (i.e., the number of sensor elements) to be calibrated.

This is particularly advantageous in some situations, such as field measurements or in flight for space instrumentation, where multiple recalibrations may be needed, so the advantages multiply.

In some particular embodiments, each pixel comprises a horizontal micropolarizer element, a vertical micropolarizer element, a diagonal top-left to down-right micropolarizer and a diagonal top-right to down-left micropolarizer.

A micropolarizer should be understood as a polarizer element which is small enough, typically in the order of hundreds of microns or lower.

The provision of these four directions is enough to provide an advantageous calibration for a wide range of current imaging polarimeters. With such a pixel, the polarization in each sensor element may be independently calibrated, since this pixel comprises all the necessary elements to calibrate it.

In some particular embodiments, each pixel comprises at least three rows of subpixels and at least three columns of subpixels, wherein each pixel comprises a horizontal micropolarizer element, a vertical micropolarizer element, a diagonal top-left to down-right micropolarizer, a diagonal top-right to down-left micropolarizer, a clockwise circular micropolarizer and a counterclockwise circular micropolarizer.

With the introduction of circular micropolarizers, a wider range of polarimeters are covered. With such a pixel, comprising at least all these six different polarization states, a beam with a complete set of polarization eigenstates is therefore available, so that any imaging polarimeter can be fully calibrated.

In some particular embodiments, at least one of the circular micropolarizers comprises a micropolarizer and a microretarder.

Circular micropolarizers may be obtained in different ways. In this particular embodiment of the invention, the combination of a micropolarizer and a microretarder is particularly suitable, since they can be introduced in the subpixel and provide an accurate calibration.

In some particular embodiments, each pixel comprises a plurality of half-wave microretarders and a plurality of quarter-wave microretarders.

In some particular embodiments,
each pixel comprises at least a half-wave microretarder with an angle of 22.5°, a quarter-wave microretarder with an angle of 45°, a half-wave microretarder with an angle of 45°, a half-wave microretarder with an angle of -22.5° and a quarter-wave microretarder with an angle of -45°; and
the calibration target further comprises a linear polarizer element for all the pixels.

In some particular embodiments, all the pixels have the same structure of micropolarizers.

Depending on the resolution of the polarimeter to be calibrated, the device may have an 8x8, a 16x16 or an even larger pixel array. These pixels are aimed to calibrate a sensor element of the polarimeter. When all the pixels of the device have the same micropolarizers structure; i.e. the same type of micropolarizers arranged in the same disposition, calibration is easier, since the same light pattern is expected in each sensor element.

In some particular embodiments, the pixels have the same size. This arrangement is easily shaped in a pixel array. In some particular embodiments, the size is smaller than 1mm². With this size, polarimeters with a high resolution may be calibrated without major problems. In some particular embodiments, the calibration target comprises at least 8 rows of pixels and 8 columns of pixels.

In a second inventive aspect, the invention provides a method for calibrating a polarimeter, the method comprising the steps of
arranging a device according to the first inventive aspect in front of the clear aperture of the polarimeter
emitting a non-polarized light towards the clear aperture of the polarimeter, wherein the non-polarized light crosses the device before arriving at the clear aperture of the polarimeter
detecting a plurality of polarizing states in the imaging polarimeter
comparing the detected polarizing states with the ones of the device.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 shows a general view of a device for calibration according to the invention, in the shape of a pixel array, with a detail of the internal structure of one of the pixels.
Figure 2a and 2b show different alternative examples of the internal structure of one pixel, according to different embodiments of the invention.
Figure 3 shows a step of a method for calibrating a polarimeter according to the invention.

### DETAILED DESCRIPTION OF THE INVENTION

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

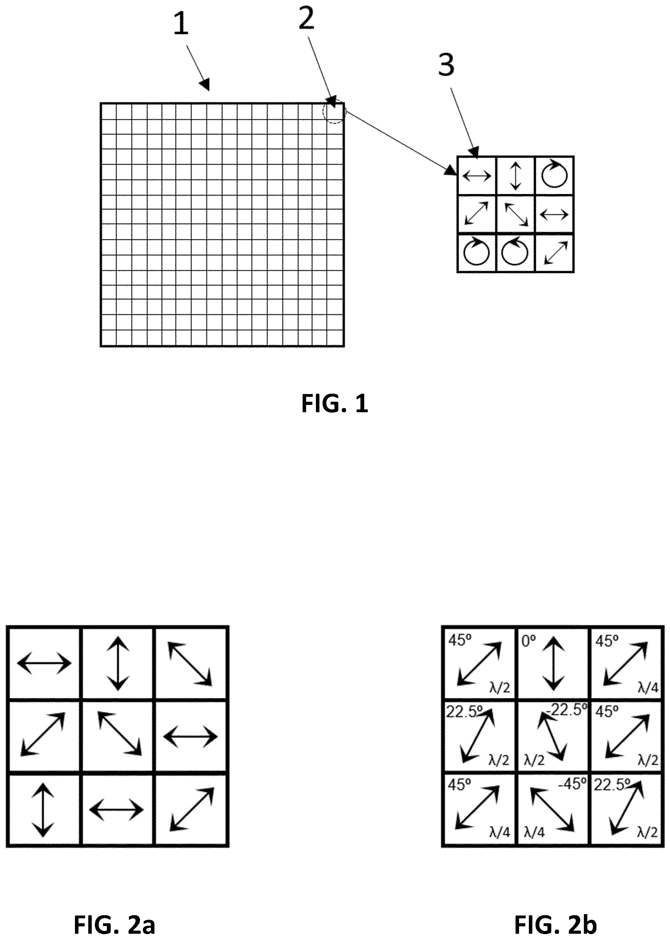

Figure 1 shows a general view of a calibration card 1 according to the invention, in the shape of a pixel array, with a detail of the internal structure of one of the pixels 2.

This card 1 has the shape of an array of pixels 2. In this case, there are 16 rows of pixels 2 and 16 columns of pixels 2. These 256 pixels 2 are identical, and are arranged in a total surface of a square with a side of 7.42 mm. This size is specially adapted for the clear aperture of a polarimeter. This means that each pixel is a square with a side of about 0.46 mm (taking into account the spacers between pixels). Each pixel 2 is in turn divided into three rows and three columns of subpixels 3. This means that each subpixel is a square with a side of 0.15 mm (taking into account the spacers between subpixels).

Each pixel is identical, not only in its size, but also in its internal structure and disposition of subpixels. In this particular example, as seen in the right portion of Figure 1, each pixel has 9 subpixels 3, which are arranged in three columns and three rows.

Each subpixel 3 has a micropolarizer. Starting from top left, the first row comprises a horizontal micropolarizer, a vertical micropolarizer and a clockwise circular micropolarizer. The central row has a diagonal top right to bottom left micropolarizer, a diagonal top left to bottom right micropolarizer and a horizontal micropolarizer. Finally, the bottom row has a clockwise circular micropolarizer, a counterclockwise circular micropolarizer and a diagonal top right to bottom left micropolarizer.

There are only six different micropolarizers, so there are three subpixels 3 which comprises a repeated micropolarizer (the horizontal micropolarizer, the diagonal top right to bottom left micropolarizer and the clockwise circular micropolarizer are repeated). This is done for several reasons. Firstly, a redundance makes the calibration algorithm more robust, and secondly, it provides a subpixel with the same number of columns and rows, which is advantageous to fit the sensor elements of the polarimeter.

In all these examples, the circular micropolarizers are obtained by superposing a micropolarizer with a retarder layer.

Figure 2a and 2b show different alternative examples of the internal structure of one pixel, according to different embodiments of the invention.

Figure 2a shows a first alternative for the arrangement of the subpixels in one of the pixels of an embodiment of a calibration target according to the invention. In this case, there are no circular micropolarizers, but an arrangement of different microretarders. This arrangement is intended to be combined with a linear polarizer, so that the result of the combination is an arrangement of microretarders which is also valid for generating a full set of polarization eigenstates. The arrows indicate the direction of the optical axis of the microretarder and the retarder for each pixel is also indicated (λ/2 of λ/4, that is half-wave retarders or a quarter-wave retarder respectively).

Figure 2b shows a second alternative for the arrangement of the subpixels in one of the pixels of an embodiment of a calibration target according to the invention. In this case, there are no circular micropolarizers, but linear micropolarizers at different angles. This embodiment is intended for those polarimeters which do not detect circular polarization. In this case, there are more repeated subpixels. An alternative could have been to locate only four subpixels in each pixel, each with a polarization (horizontal, vertical, diagonal from top left to bottom right and diagonal from top right to bottom left).

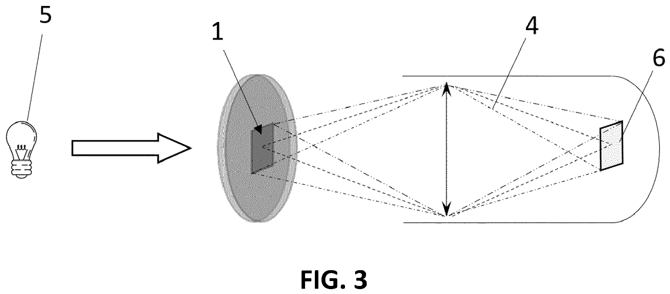

Figure 3 shows a step of a method for calibrating a polarimeter 4 according to the invention.

In this method, a calibration target 1 according to the previous figures is arranged in front of the imaging polarimeter 4. The calibration target 1 is arranged in the field of view and focusing distance of the polarimeter. This calibration target 1 comprises a resolution which coincides with the desired resolution of the imaging polarimeter 4 to be calibrated: the number of pixels of the target 1 is in agreement with the set of sensor elements 6 of the imaging polarimeter 4 that are expected that will require the same polarimetric calibration.

With this arrangement, the emission of a non-polarized light, by means of a light source 5, towards the imaging polarimeter 4 and the acquisition of a snapshot is enough to perform a calibration, since just some sensor elements 6 of the polarimeter detects the light which has been polarized by each of the subpixels of the calibration target 1. Namely, each pixel from the target containing the different polarization states corresponds to a small area in polarimeter sensor and, therefore, an area of the image.

Hence, a plurality of polarizing states are detected by each set of sensor elements of the imaging polarimeter, and then the detected state may be compared with the expected one for the acquired image.

## Claims

1. Calibration target (1) for the calibration of an imaging polarimeter, the imaging polarimeter comprising a plurality of sensor elements, wherein
the calibration target (1) comprises a pixel array, the array comprising at least two rows of pixels (2) and two columns of pixels (2); and
each pixel (2) comprises at least nine subpixels (3), each subpixel (3) comprising at least a micropolarizer element, so that each pixel comprises at least nine micropolarizers, at least four of them being different.

2. Calibration target (1) according to claim 1, wherein each pixel (2) comprises a horizontal linear micropolarizer element, a vertical linear micropolarizer element, a diagonal top-left to down-right linear micropolarizer and a diagonal top-right to down-left linear micropolarizer.

3. Calibration target (1) according to any of the preceding claims, wherein each pixel (2) comprises at least three rows of subpixels (3) and at least three columns of subpixels (3), wherein each pixel (2) comprises a horizontal linear micropolarizer element, a vertical linear micropolarizer element, a diagonal top-left to down-right linear micropolarizer, a diagonal top-right to down-left linear micropolarizer, a clockwise circular micropolarizer and a counterclockwise circular micropolarizer.

4. Calibration target (1) according to claim 3, wherein at least one of the circular micropolarizers comprises a micropolarizer and a microretarder.

5. Calibration target (1) according to any of claims 1 or 2, wherein
each pixel (2) comprises at least three rows of subpixels (3) and at least three columns of subpixels (3),
each pixel (2) comprises a plurality of half-wave microretarders and a plurality of quarter-wave microretarders.

6. Calibration target (1) according to claim 5, wherein
each pixel comprises at least a half-wave microretarder with an angle of 22.5°, a quarter-wave microretarder with an angle of 45°, a half-wave microretarder with an angle of 45°, a half-wave microretarder with an angle of -22.5° and a quarter-wave microretarder with an angle of -45°
the calibration target further comprises a linear polarizer element for all the pixels.

7. Calibration target (1) according to any of the preceding claims, wherein all the pixels (2) have the same structure of micropolarizers.

8. Calibration target (1) according to any of the preceding claims, wherein the pixels (2) have the same size.

9. Calibration target (1) according to claim 8, wherein the size is smaller than 1 mm².

10. Calibration target (1) according to any of the preceding claims, comprising at least 8 rows of pixels and 8 columns of pixels.

11. Method for calibrating a polarimeter (4), the method comprising the steps of
arranging a calibration target (1) according to any of the preceding claims in front of the clear aperture of the polarimeter
emitting a non-polarized light towards the clear aperture of the polarimeter, wherein the non-polarized light crosses the calibration target (1) before arriving at the clear aperture of the polarimeter
detecting a plurality of polarizing states in the polarimeter
comparing the detected polarizing states with the ones of the calibration target (1).
